# EUROPÄISCHE PATENTANMELDUNG

(11) **EP 0 959 631 A2**
(43) Veröffentlichungstag der Anmeldung: **24.11.1999**
(21) Anmeldenummer: 99106604.4
(22) Anmeldetag: 31.03.1999
(51) Int. Cl.: H04Q 3/545

(54) **Telekommunikationseinrichtung**

(30) Priorität: 09.04.1998 DE 19817528
(71) Anmelder: ELMEG GmbH & Co. KG Kommunikationstechnik, 31228 Peine (DE)
(72) Erfinder: Harderich, Wolfgang Dipl.-Ing., 31234 Edemissen (DE)
(74) Vertreter: Eisenführ, Speiser & Partner

(57) **Zusammenfassung**

Telekommunikationseinrichtung, insbesondere Telekommunikationsanlage zum Betrieb von Telekommunikationsendgeräten, mit einer Zentraleinheit (1), die mit einem Telekommunikationsnetz (4) verbindbar ist, einem mit der Zentraleinheit (1) verbundenen ersten Speicher (2), mit den Grundfunktionen der Telekommunikationseinrichtung, und wenigstens einer mit der Zentraleinheit (1) verbundenen Anschlußeinrichtung (6) zum Anschluß eines Funktionsmoduls (7; 7') zur Erweiterung der Funktionen der Telekommunikationseinrichtung, wobei die Zentraleinheit (1) eine erste Einrichtung (9) zur Erfassung der Art eines mit der Anschlußeinrichtung (6) verbundenen Funktionsmoduls (7), eine damit verbundene Steuereinrichtung (10), eine mit dieser verbundene Freigabeeinrichtung (11) und eine mit der Freigabeeinrichtung (11) sowie dem ersten Speicher (2) verbundene Verarbeitungseinrichtung (12) umfaßt, wobei die Steuereinrichtung (10) derart ausgebildet ist, daß sie bei oder nach Anschließen eines Funktionsmoduls (7) in Abhängigkeit von der Art des Funktionsmoduls (7) über das Telekommunikationsnetz (4) dem Funktionsmodul (7) zugeordnete Funktionsinformationen abruft und in einem mit der Verarbeitungseinrichtung (12) verbundenen zweiten Speicher (13) ablegt.

## Beschreibung

Die Erfindung betrifft eine Telekommunikationseinrichtung gemäß dem Oberbegriff des Anspruchs 1.

Es ist hinlänglich bekannt, die Leistungsmerkmale bekannter Telekommunikationsanlagen über Steckmodule oder dergleichen zu erweitern, auf denen die entsprechenden Informationen, wie beispielsweise Steuerprogramme, Steuerdaten etc., zur Funktionserweiterung der Telekommunikationsanlage gespeichert sind, auf welche die Zentraleinheit zur Nutzung der Erweiterungsfunktionen dann zugreifen kann.

Der Nachteil der bekannten Telekommunikationsanlagen besteht dabei allerdings darin, daß der sich der Grad der Leistungserweiterung der in der Regel mit dem jeweiligen Funktionsmodul verbunden ist infolge der fest auf den jeweiligen Funktionsmodulen gespeicherten Funktionsinformationen aufden Aktualitätsstand bei der Herstellung des Funktionsmoduls beschränkt, so daß gerade Funktionserweiterungen, die auf sich häufig ändernden Informationen beruhen, sehr schnell veralten und damit häufig wertlos werden.

Das Aktualisieren des Leistungsumfanges der Telekommunikationsanlage muß zudem durch Austauschen eines alten Funktionsmoduls gegen ein neues aktuelleres Funktionsmodul erfolgen. Hierdurch fällt zum einen entweder durch nicht mehr zu verwendende alte Funktionsmodule eine große Menge teuer zu entsorgender Elektronikschrott an oder es ist erheblicher Aufwand zum Aktualisieren bzw. Umprogrammieren der alten Funktionsmodule erforderlich. Zum anderen müssen die Anschlußeinrichtungen und die Funktionsmodule für ein häufiges Austauschen entsprechend robust und damit aufwendig und teuer gestaltet sein.

Ein weiterer Nachteil der bekannten Telekommunikationsanlagen besteht darin, daß die Funktionsmodule selbst je nach Komplexität der Zusatzfunktion entsprechend aufwendig und teuer gestaltet sein müssen.

Der Erfindung liegt deshalb die Aufgabe zugrunde, eine Telekommunikationseinrichtung der eingangs genannten Art zur Verfügung zu stellen, welche die genannten Nachteile nicht oder zumindest in geringerem Maß aufweist und die insbesondere eine möglichst aktuelle, einfaches und damit kostengünstige Funktionserweiterung ermöglicht.

Die Aufgabe wird, ausgehend von einer Telekommunikationseinrichtung gemäß dem Oberbegriff des Anspruchs 1, durch die im kennzeichnenden Teil des Anspruchs 1 angegebenen Merkmale gelöst.

Die Erfindung schließt die technische Lehre ein, daß man eine besonders einfache und kostengünstige, und aktuelle Funktionserweiterung der Telekommunikationseinrichtung sowie besonders einfach aufgebaute Funktionsmodule erhält, wenn die den mit den Anschlußeinrichtungen verbundenen Funktionsmodulen zugeordneten Funktionsinformationen nicht fest in den Funktionsmodulen gespeichert sind, sondern erfindungsgemäß bei oder nach dem Anschließen des Funktionsmoduls die dem Funktionsmodul zugeordneten Funktionsinformationen durch die Zentraleinheit über das Telekommunikationsnetz, mit dem die Zentraleinheit ohnehin verbunden ist, von einem mit dem Telekommunikationsnetz verbundenen Datenspeicher abgerufen werden und in einem zweiten Speicher abgelegt werden, auf den die Verarbeitungseinrichtung der Zentraleinheit dann zugreifen kann.

Hierzu umfaßt die Zentraleinheit eine erste Einrichtung zur Erfassung der Art eines mit der Anschlußeinrichtung verbundenen Funktionsmoduls, eine mit der ersten Einrichtung verbundene Steuereinrichtung, eine mit der Steuereinrichtung verbundene Freigabeeinrichtung und eine mit der Freigabeeinrichtung sowie dem ersten Speicher verbundene Verarbeitungseinrichtung. Die Steuereinrichtung ist dabei derart ausgebildet, daß sie bei oder nach Verbindung eines Funktionsmoduls mit der Anschlußeinrichtung in Abhängigkeit von der erfaßten Art des Funktionsmoduls über das Telekommunikationsnetz aus einem mit dem Telekommunikationsnetz verbundenen Datenspeicher dem Funktionsmodul zugeordnete Funktionsinformationen abruft und in einem bei Verbindung eines Funktionsmoduls mit der Anschlußeinrichtung über die Freigabeeinrichtung mit der Verarbeitungseinrichtung verbundenen zweiten Speicher ablegt.

Durch die erste Einrichtung zur Erfassung der Art eines mit der Anschlußeinrichtung verbundenen Funktionsmoduls ist dabei sichergestellt, daß die der Art des jeweiligen Funktionsmoduls entsprechenden Funktionsinformationen abgerufen und im zweiten Speicher abgelegt werden. Dadurch daß die in dem Datenspeicher abgelegten Informationen stets auf dem neuesten Stand gehalten werden können, ist garantiert, daß bei Verbinden des Funktionsmoduls mit der Anschlußeinrichtung unabhängig vom Herstellungszeitpunkt des Funktionsmoduls stets die aktuellste Version der Funktionsinformationen abgerufen wird. Hierdurch ist also in zuverlässiger Weise vermieden, daß die Funktionselemente ein zwangsläufiges Verfallsdatum aufweisen.

Der zweite Speicher für die jeweiligen Funktionsinformationen kann dabei in dem jeweiligen Funktionsmodul untergebracht sein. Um das jeweilige Funktionsmodul sowie die Anschlußeinrichtungen aber besonders einfach und damit billig aufbauen zu können, umfaßt vorzugsweise die Zentraleinheit den zweiten Speicher.

Bei besonders vorteilhaften Varianten der erfindungsgemäßen Telekommunikationseinrichtung umfaßt die erste Einrichtung zur Erfassung der Art eines mit der Anschlußeinrichtung verbundenen Funktionsmoduls eine erste Vergleichereinheit, deren erster Eingang mit einem ersten Anschluß der Anschlußeinrichtung und deren zweiter Eingang mit einem dritten Speicher verbunden ist. Dabei ist der erste Anschluß bei Verbindung eines Funktionsmoduls mit der Anschlußeinrichtung mit einem vierten Speicher des Funktionsmoduls verbunden, in dem eine erste Information über die Art des Funktionsmoduls gespeichert ist. Der dritte Speicher enthält zweite Informationen über die Art der mit der Anschlußeinrichtung verbindbaren Funktionsmodule. Zur Auslösung des Vergleichs der ersten Information und der zweiten Informationen in der ersten Vergleichereinheit ist wenigstens eine erste Betätigungseinheit vorgesehen.

Durch den Vergleich der im dritten Speicher des angeschlossenen Funktionsmoduls abgelegten ersten Information und der im vierten Speicher abgelegten zweiten Informationen in ersten Vergleichereinheit wird in einfacher Weise die Art des Funktionsmoduls ermittelt. Die Vergleichereinheit sendet dann einen dem Vergleichsergebnis entsprechenden Schaltimpuls an die Steuereinrichtung, die dann die entsprechenden Funktionsinformationen über das Telekommunikationsnetz abruft.

Die erste Betätigungseinheit, durch die der Vergleich in der ersten Vergleichereinheit ausgelöst wird, kann dabei ein gesondertes durch den Bediener zu betätigendes Betätigungsmittel, beispielsweise einem Schalter, einer Taste oder dergleichen umfassen. Vorzugsweise die erste Betätigungseinheit zur unmittelbaren Betätigung beim Verbinden des Funktionsmoduls mit der Anschlußeinrichtung ausgebildet, so daß eine gesonderte Betätigung durch den Bediener entfällt und daher auch nicht vergessen werden kann. Hierzu kann beispielsweise beim Verbinden des Funktionsmoduls mit der Anschlußeinrichtung ein entsprechender galvanische Kontakt geschlossen werden oder auch mechanisch ein Schalter oder dergleichen geschlossen werden.

Die bei diesen Varianten ergibt sich zudem ein besonders einfacher Aufbau des Funktionsmoduls, da dieses letztlich nur den dritten Speicher mit der der Art des Funktionsmoduls entsprechenden Information aufweisen muß. Hierdurch können sämtliche Funktionsmodule unabhängig von ihrer Art identisch aufgebaut sein und sich lediglich durch die im dritten Speicher abgelegte Information unterscheiden, so daß die Herstellungskosten für die Funktionsmodule erheblich sinken. Zudem werden hierdurch auch spezielle Anschlußgestaltungen für Funktionsmodule unterschiedlicher Art überflüssig, so daß zum einen auch die Herstellungskosten für die Telekommunikationseinrichtung selbst sinken als auch die Fehlermöglichkeiten beim Anschließen unterschiedlicher Funktionsmodule wegfallen.

Bei bevorzugten Ausführungen der erfindungsgemäßen Telekommunikationseinrichtung umfaßt die Steuereinheit eine Download-Einheit zum Abrufen der dem Funktionsmodul zugeordneten Steuerdaten über das Telekommunikationsnetz und Ablegen der abgerufenen Steuerdaten im zweiten Speicher, die beim Verbinden des Funktionsmoduls mit der Anschlußeinrichtung mit dem Ausgang der ersten Vergleichereinheit sowie dem zweiten Speicher verbunden ist, so daß sie in Abhängigkeit von dem durch die erste Vergleichereinheit ausgesandten Schaltsignal die der Art des angeschlossenen Funktionsmoduls entsprechenden Funktionsinformationen abruft.

Bei besonders einfach aufgebauten Varianten umfaßt die Steuereinheit für die jeweilige Funktionsmodulart dabei wenigstens ein beim Verbinden des Funktionsmoduls mit der Anschlußeinrichtung mit der ersten Vergleichereinheit verbundenes erstes Adressiermodul, das mit dem Steuereingang der Download-Einheit verbunden ist. Je nach ermittelter Art des mit der Anschlußeinrichtung verbundenen Funktionsmoduls wird dabei das entsprechende Adressiermodul durch einen entsprechenden Schaltimpuls der ersten Vergleichereinheit betätigt, wodurch dieses einen entsprechenden Steuerimpuls zum Abrufen der entsprechenden Funktionsinformationen an die Download-Einheit sendet.

Um den Anschluß mehrerer unterschiedlicher Funktionsmodule zu ermöglichen ist bei bevorzugten Ausführungen der erfindungsgemäßen Telekommunikationseinrichtung eine Anzahl von Anschlußeinrichtungen vorgesehen. Die Steuereinrichtung umfaßt dabei vorzugsweise eine zweite Einrichtung zur Erfassung der Art der mit den Anschlußeinrichtungen verbundenen Funktionsmodule, die zur Anzeige des Anschließens eines weiteren Funktionsmoduls einer bereits angeschlossenen Art mit einer Signaleinrichtung verbunden ist. Hierdurch wird in einfacher Weise vermieden, daß unbeabsichtigt mehrere Funktionsmodule derselben Art angeschlossen werden. Die Signaleinrichtung kann dabei in vielfacher bekannter Weise gestaltet sein. So kann sie optisch beispielsweise in Form einer blinkenden Leuchtdiode, eines Displays mit entsprechender Textausgabe etc. realisiert sein. Zusätzlich oder alternativ ist es selbstverständlich möglich, eine akustische Signaleinrichtung vorzusehen.

Vorzugsweise weist die erste Vergleichereinheit dabei für die jeweilige Funktionsmodulart einen Ausgang auf und die zweite Einrichtung umfaßt für die jeweilige Funktionsmodulart einen ersten Umschalter, dessen Eingang mit dem Ausgang der ersten Vergleichereinheit, dessen erster Ausgang mit dem jeweiligen ersten Adressiermodul und dessen zweiter Ausgang mit der Signaleinrichtung verbunden ist. Der jeweilige erste Umschalter ist dabei derart ausgebildet, daß er nach Ansprechen des ersten Adressiermoduls durch die erste Vergleichereinheit den Ausgang der ersten Vergleichereinheit mit der Signaleinrichtung verbindet, so daß mit geringem schaltungstechnischen Aufwand bei Anschließen eines weiteren Funktionsmoduls derselben Art ein entsprechendes Hinweissignal ausgegeben wird.

Bei besonders günstigen Weiterbildungen der erfindungsgemäßen Telekommunikationseinrichtung ist die Freigabeeinrichtung zum Herstellen der Verbindung zwischen dem jeweiligen zweiten Speicher, der für die dem jeweiligen Funktionsmodul zugeordneten Funktionsinformationen vorgesehen ist, und der Verarbeitungseinheit mit dem Ausgang der ersten Vergleichereinheit oder dem ersten Ausgang des jeweiligen ersten Umschalters verbunden. Hierdurch ist in einfacher Weise sichergestellt, daß bei Anschluß eines Funktionsmoduls unmittelbar nach Erfassen der Art des Funktionsmoduls durch die erste Vergleichereinheit derzweite Speicher, in dem die der erfaßten Art entsprechenden, von der Download-Einheit abgerufenen Funktionsinformationen gespeichert werden, mit der Verarbeitungseinheit verbunden ist und somit für den Zugriff durch die Verarbeitungseinheit freigegeben ist.

Um mit einfachen Mitteln sicherzustellen, daß die dem jeweiligen Funktionsmodul zugeordneten Zusatzfunktionen nur zur Verfügung stehen, wenn das entsprechende Funktionsmodul mit der oder einer der Anschlußeinrichtungen verbunden ist, ist bei bevorzugten Varianten der Erfindung vorgesehen, daß die erste Einrichtung eine Erfassungseinheit zur Erfassung des Lösens des jeweiligen Funktionsmoduls von der Anschlußeinrichtung umfaßt, die zum Lösen der Verbindung zwischen dem zweiten Speicher, der die dem jeweiligen Funktionsmodul zugeordneten Funktionsinformationen enthält, und der Verarbeitungseinheit mit der Freigabeeinrichtung verbunden ist.

Die Erfassungseinheit umfaßt hierzu vorzugsweise eine zweite Vergleichereinheit, deren erster Eingang mit dem ersten Anschluß der Anschlußeinrichtung, deren zweiter Eingang mit einem fünften Speicher und deren Ausgang zur Betätigung der Freigabeeinrichtung mit der Freigabeeinrichtung verbunden ist. Dabei ist der erste Anschluß bei Verbindung eines Funktionsmoduls mit der Anschlußeinrichtung mit dem dritten Speicher des Funktionsmoduls verbunden. Der vierte Speicher enthält zweite Informationen über die Art der mit der Anschlußeinrichtung verbindbaren Funktionsmodule. Zur Auslösung des Vergleichs der ersten Information und der zweiten Informationen in der zweiten Vergleichereinheit und des aus dem Vergleich resultierenden Betätigungssignals für die Freigabeeinrichtung ist weiterhin wenigstens eine zweite Betätigungseinheit vorgesehen ist, die vorzugsweise zur Betätigung beim Lösen des Funktionsmoduls von der Anschlußeinrichtung ausgebildet ist, um ein sofortiges Trennen der Verbindung zwischen dem entsprechenden zweiten Speicher und der Verarbeitungseinrichtung sicherzustellen.

Bei den Varianten, bei denen eine zweite Einrichtung zur Erfassung der Art der an den Anschlußeinrichtungen vorgesehen ist, ist vorzugsweise die zweite Vergleichereinheit zum Rücksetzen der zweiten Einrichtung beim Lösen eines Funktionsmoduls mit der zweiten Einrichtung verbunden. Hierdurch ist sichergestellt, daß das Entfernen eines Funktionsmoduls von einer der Anschlußeinrichtungen registriert wird und nicht beim erneuten Anschließen eines Funktionsmoduls derselben Art fälschlicherweise ein Signal ausgegeben wird, welches das Vorhandensein eines solchen Funktionsmoduls anzeigt.

Bei günstigen Varianten der Erfindung ist für das jeweilige erste Adressiermodul eine dritte Betätigungseinrichtung vorgesehen. Diese dritte Betätigungseinrichtung betätigt das jeweilige erste Adressiermodul und bewirkt somit einen entsprechenden Adreßimpuls des ersten Adressiermoduls an die Download-Einheit, welche dann die entsprechenden Funktionsinformationen über das Telekommunikationsnetz abruft und in dem entsprechenden zweiten Speicher ablegt

Um ein regelmäßiges Update der dem jeweiligen mit einer der Anschlußeinrichtungen verbundenen Funktionsmodul zugeordneten Funktionsinformationen zu erhalten ist bei besonders vorteilhaften Varianten der erfindungsgemäßen Telekommunikationseinrichtung vorgesehen, daß das jeweilige zur Betätigung des ersten Adressiermoduls in vorgebbaren Intervallen eine mit Betätigung des ersten Adressiermoduls aktivierte Zeitschaltung umfaßt. Diese Zeitschaltung betätigt also in bestimmten, vorzugsweise vorgebbaren Zeitintervallen das jeweilige erste Adressiermodul und bewirkt somit einen entsprechenden Adreßimpuls des ersten Adressiermoduls an die Download-Einheit, welche dann die entsprechenden Funktionsinformationen über das Telekommunikationsnetz abruft und in dem entsprechenden zweiten Speicher ablegt. Vorzugsweise ist die Zeitschaltung zur Deaktivierung beim Lösen der Verbindung des entsprechenden Funktionsmoduls mit der Anschlußeinrichtung mit der zweiten Vergleichereinheit verbunden ist, um sicherzustellen, daß das Update nur erfolgt, solange auch ein entsprechendes Funktionsmodul angeschlossen ist.

Bei weiteren günstigen Weiterbildungen der Erfindung ist wenigstens eine dritte Betätigungseinrichtung zur Betätigung des jeweiligen ersten Adressiermoduls vorgesehen, durch die der Bediener dann in beliebigen Abständen in der geschilderten Weise ein Update der jeweiligen Funktionsinformationen erzielen kann, sofern ein entsprechendes Funktionsmodul angeschlossen ist. Vorzugsweise ist dabei die dritte Betätigungseinrichtung zur Aktivierung mit der ersten Vergleichereinheit und zur Deaktivierung mit der zweiten Vergleichereinheit verbunden, um wiederum sicherzustellen, daß das Update nur erfolgt, solange auch ein entsprechendes Funktionsmodul angeschlossen ist.

Es versteht sich, daß die erfindungsgemäße Telekommunikationseinrichtung in bekannter Weise mit einem entsprechenden Gehäuse oder dergleichen versehen ist. Bei besonders vorteilhaften Varianten der erfindungsgemäßen Telekommunikationseinrichtung ist die Anschlußeinrichtung bzw. sind die Anschlußeinrichtungen nach Art einer Steckverbindung ausgebildet, so daß ein besonders einfaches Aufrüsten der Telekommunikationseinrichtung durch einfaches Einstecken der gewünschten Funktionsmodule möglich ist. Bei weiteren vorteilhaften Varianten ist die jeweilige Anschlußeinrichtung als durch einen Deckel verschließbare Anschlußbuchse ausgebildet ist, wodurch in einfacher Weise ein Schutz gegen Verschmutzung und zusätzlich ein Berührschutz erzielt ist.

Die Erfindung betrifft weiterhin ein Funktionsmodul für eine erfindungsgemäße Telekommunikationseinrichtung das sich dadurch auszeichnet, daß es lediglich einen vierten Speicher umfaßt, in dem eine erste Information über die Art des Funktionsmoduls gespeichert ist.

Vorzugsweise umfaßt das erfindungsgemäße Funktionsmodul einen bei Verbinden mit der Anschlußeinrichtung betätigten und mit dem dritten Speicher verbundenen ersten Adressierer umfaßt, der mit dem vierten Speicher verbunden ist, so daß der Adreßimpuls des ersten Adressierers bei Verbinden mit der Anschlußeinrichtung das Auslesen der ersten Information aus dem vierten Speicher und der zweiten Informationen aus dem dritten Speicher in die erste Vergleichereinheit und damit in besonders einfacher Weise die Erfassung der Art des Funktionsmoduls auslöst. Weiter vorzugsweise umfaßt das Funktionsmodul einen bei Lösen von der Anschlußeinrichtung betätigten und dem fünften Speicher verbundenen zweiten Adressierer, der mit dem vierten Speicher verbunden ist, so daß infolge des Lösens in einfacher Weise die zweite Vergleichereinheit mit den oben beschriebenen Folgen, wie beispielsweise der Sperrung der dem Funktionsmodul zugeordneten Funktionsinformationen, betätigt wird.

Das Funktionsmodul ist dabei entsprechend der Anschlußeinrichtung vorzugsweise als einfaches Steckmodul ausgebildet, um eine leichte Montage bzw. ein problemloses Aufrüsten der Telekommunikationseinrichtung zu ermöglichen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- - Figur 1: das Blockschaltbild eines bevorzugten Ausführungsbeispiel der erfindungsgemäßen Telekommunikationseinrichtung,
- - Figur 2: das Blockschaltbild einer weiteren bevorzugten Ausführung der erfindungsgemäßen Telekommunikationseinrichtung,
- - Figur 3: einen Schnitt durch die Ausführung aus Figur 1.

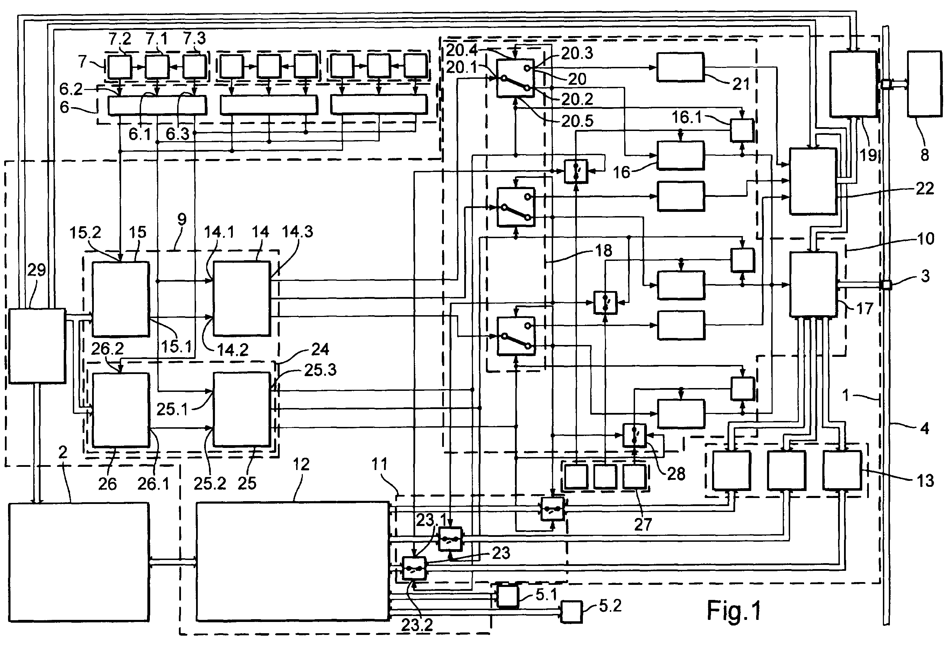

Figur 1 zeigt ein Blockschaltbild einer Ausführung der erfindungsgemäßen Telekommunikationseinrichtung mit einer Zentraleinheit 1, die mit einem ersten Speicher 2 verbunden ist. Im ersten Speicher 2 sind die Funktionsinformationen, also Steuerprogramme und Steuerdaten etc., für die Grundfunktionen der Telekommunikationseinrichtung gespeichert, auf welche die Zentraleinheit 1 bei der Ausführung der Grundfunktionen der Telekommunikationseinrichtung zugreift. Die Zentraleinheit ist über eine Schnittstelle 3 mit dem Telekommunikationsnetz 4 verbunden. Die Telekommunikationseinrichtung ist dabei eine Telekommunikationsanlage zum Betrieb mehrerer Telekommunikationsendgeräte 5.1, 5.2, beispielsweise Telefonen, Modems etc., die in herkömmlicher Weise an der Zentraleinheit 1 angeschlossen sind.

Zur Erweiterung der Funktionen der Telekommunikationsanlage ist eine Anzahl von Anschlußeinrichtungen 6 für Funktionsmodule 7 vorgesehen, die als einfache Steckbuchse ausgebildet sind.

Die Funktionserweiterung der Telekommunikationsanlage erfolgt dabei erfindungsgemäß dadurch, daß durch die Zentraleinheit 1 die Art des jeweiligen mit einer Anschlußeinrichtung 6 verbundenen Funktionsmoduls 7 erfaßt wird und die Zentraleinheit 1 dann über das Telekommunikationsnetz 4 aus einem mit dem Telekommunikationsnetz 4 verbundenen Datenspeicher 8 die der Art des Funktionsmoduls 7 zugeordneten Funktionsinformationen abruft so und abspeichert, daß sie zur Ausführung der zusätzlichen Funktionen darauf zugreifen kann.

Die Zentraleinheit 1 umfaßt hierzu eine erste Einrichtung 9 zur Erfassung der Art eines mit einer der Anschlußeinrichtungen 6 verbundenen Funktionsmoduls 7, eine mit der ersten Einrichtung 9 verbundene Steuereinrichtung 10, eine mit der Steuereinrichtung 10 verbundene Freigabeeinrichtung 11 und eine mit der Freigabeeinrichtung 11 sowie dem ersten Speicher 2 verbundene Verarbeitungseinrichtung 12. Die Zentraleinheit 1 umfaßt weiterhin für jede mögliche Funktionsmodulart einen zweiten Speicher 13, der mit der Steuereinrichtung 10 und der Freigabeeinrichtung 11 verbunden ist. In dem jeweiligen zweiten Speicher 13 legt die Steuereinrichtung 10 die abgefragten Funktionsinformationen ab. Die Freigabeeinrichtung 11 ist dabei so ausgebildet, daß je nachdem, ob ein entsprechendes Funktionsmodul 7 an einer der Anschlußeinrichtungen 6 angeschlossen ist oder nicht, derjeweilige zweite Speicher 13 über die Freigabeeinrichtung 11 mit der Verarbeitungseinrichtung 12 verbunden ist oder nicht.

Um die Art eines mit einer der Anschlußeinrichtungen 6 verbundenen Funktionsmoduls 7 zu erfassen, weist die erste Einrichtung 9 eine erste Vergleichereinheit 14 und einen dritten Speicher 15 auf, der zweite Informationen über die Art der mit der Anschlußeinrichtung 6 verbindbaren Funktionsmodule 7 enthält. Der erste Eingang 14.1 der ersten Vergleichereinheit 14 ist dabei jeweils mit einem ersten Anschluß 6.1 der Anschlußeinrichtungen 6 verbunden, über den er mit einem vierten Speicher 7.1 des Funktionsmoduls 7 verbunden ist, in dem eine erste Information über die Art des Funktionsmoduls 7 gespeichert ist. Der zweite Eingang 14.2 der ersten Vergleichereinheit 14 ist mit dem Ausgang 15.1 des dritten Speichers 15 verbunden. Beim Anschließen des Funktionsmoduls 7 an die Anschlußeinrichtung 6 werden die erste Information aus dem vierten Speicher 7.1 des Funktionsmoduls 7 und die zweiten Informationen aus dem dritten Speicher in die Vergleichereinheit 14 eingelesen, so daß diese die erste Information mit den zweiten Informationen vergleicht und daraus in Abhängigkeit davon, welche derzweiten Informationen mit der ersten Information übereinstimmt, an einem ihrer Ausgänge 14.3 eine Schaltimpuls für die Steuereinrichtung 10 anlegt, die dann in Abhängigkeit von diesem Schaltimpuls die entsprechenden Funktionsinformationen über das Telekommunikationsnetz 4 abruft und in dem entsprechenden zweiten Speicher 13 ablegt.

Die Steuereinrichtung 10 umfaßt hierzu einen beim erstmaligen Verbinden eines Funktionsmoduls 7 einer bestimmten Art mit den Ausgängen 14.3 der ersten Vergleichereinheit 14 über ein erstes Adressiermodul 17 verbundene Download-Einheit 16, die mit den zweiten Speichern 13 verbunden ist. Der Schaltimpuls am jeweiligen Ausgang 14.3 der ersten Vergleichereinheit 14 betätigt das erste Adressiermodul 17, das dann einen der erfaßten Art des Funktionsmoduls 7 entsprechenden Adreßimpuls an die Download-Einheit 16 sendet und somit das Abrufen und Speichern der entsprechenden Funktionsinformationen auslöst.

Zur Auslösung des Vergleiches der ersten und zweiten Informationen in der ersten Vergleichereinheit 14 umfassen die Anschlußeinrichtungen 6 einen zweiten Anschluß 6.2, über den eine im Funktionsmodul 7 vorgesehene mit dem Adreßeingang des vierten Speichers 7.1 verbundene, als erster Adressierer 7.2 ausgebildete erste Betätigungseinheit mit dem Adreßeingang 15.2 des dritten Speichers 15 verbunden ist. Die Anschlußeinrichtung 6 und das Funktionsmodul 7 sind dabei so ausgebildet, daß der erste Adressierer 7.2 beim Verbinden des Funktionsmoduls 7 mit der Anschlußeinrichtung 6 betätigt wird und somit durch entsprechende Adreßimpulse das Auslesen der ersten Information aus dem vierten Speicher 7.1 sowie das Auslesen der zweiten Information aus dem dritten Speicher 15 in die erste Vergleichereinheit 14 bewirkt. Es versteht sich jedoch, daß bei anderen Varianten der Erfindung die Betätigungseinheit auch als von dem Bediener gesondert zu betätigender Schalter oder dergleichen ausgeführt sein kann.

Die Steuereinrichtung 10 umfaßt weiterhin eine zweite Einrichtung 18 zur Erfassung der Art der an den Anschlußeinrichtungen 6 angeschlossenen Funktionsmodule 7. Zum Anzeigen des Anschließens eines weiteren Funktionsmoduls 7 einer bereits angeschlossenen Art ist ein Display 19 vorgesehen, das mit der zweiten Einrichtung 18 verbunden ist. Diese zweite Einrichtung 18 ist von jeweils einem Umschalter 20 gebildet, dessen Eingang 20.1 mit einem der Ausgänge 14.3 der ersten Vergleichereinheit 14 verbunden ist. Im Ausgangszustand ist der Eingang 20.1 des Umschalters 20 mit seinem ersten Ausgang 20.2 verbunden, an dem das erste Adressiermodul 16 angeschlossen ist. Wird also ein Funktionsmodul 7 der entsprechenden Art erstmals angeschlossen, wird das erste Adressiermodul 16 von der ersten Vergleichereinheit 14 betätigt.

Der zweite Ausgang des Umschalters ist mit einem zweiten Adressiermodul 21 verbunden, das wenn es angesprochen wird zur Ausgabe einer Information auf dem Display 19 einen Ausgabespeicher 22 adressiert.

Der Umschalter 20 ist so ausgebildet, daß er nach Ansprechen des ersten Adressiermoduls 16 den Ausgang 14.3 der ersten Vergleichereinheit 14 mit seinem zweiten Ausgang 20.3 verbindet. Hierzu ist der ersten Ausgang des Umschalters 20 mit dem ersten Schalteingang 20.4 verbunden. Wird also ein weiteres Funktionsmodul 7 derselben Art an eine freie Anschlußeinrichtung 6 angeschlossen, so wird der Schaltimpuls der ersten Vergleichereinheit an das zweite Adressiermodul 21 weitergeleitet und infolgedessen eine entsprechende Warnmeldung auf dem Display 19 ausgegeben. Es versteht sich, daß bei anderen Varianten der Erfindung alternativ oder zusätzlich auch noch ein akustisches Hinweissignal ausgegeben werden kann.

Um die Verbindung zwischen dem jeweiligen zweiten Speicher 13 und der Verarbeitungseinrichtung 12 herzustellen, wenn ein entsprechendes Funktionsmodul 7 angeschlossen ist, ist der erste Ausgang 20.1 des jeweiligen Umschalters 20 mit der Freigabeeinrichtung 11 verbunden. Diese umfaßt dabei jeweils einen zwischen dem jeweiligen zweiten Speicher 13 angeordneten ersten Schalter 23, dessen erster Schalteingang 23.1 mit dem ersten Ausgang 20.1 des jeweiligen Umschalters 20 verbunden ist, wobei der ersten Schalter 23 bei anliegen eines Schaltimpulses an seinem ersten Schalteingang 23.1 geschlossen wird.

Um sicherzustellen, daß die Verarbeitungseinrichtung 12 auf die in dem entsprechenden zweiten Speicher 13 abgelegten Funktionsinformationen zugreifen kann, wenn auch ein entsprechendes Funktionsmodul 7 angeschlossen ist, weist die erste Einrichtung 9 weiterhin eine Erfassungseinheit 24 zur Erfassung des Lösens eines Funktionsmoduls 7 von einer Anschlußeinrichtung 6 auf.

Die Erfassungseinheit weist hierzu eine zweite Vergleichereinheit 25 und einen fünften Speicher 26 auf, der zweite Informationen über die Art der mit der Anschlußeinrichtung 6 verbindbaren Funktionsmodule 7 enthält. Dererste Eingang 25.1 der zweiten Vergleichereinheit 25 ist dabei jeweils mit dem ersten Anschluß 6.1 der Anschlußeinrichtungen 6 verbunden, über den er mit dem vierten Speicher 7.1 des Funktionsmoduls 7 verbunden ist, in dem die erste Information über die Art des Funktionsmoduls 7 gespeichert ist. Der zweite Eingang 25.2 der zweiten Vergleichereinheit 25 ist mit dem Ausgang 26.1 des fünften Speichers 26 verbunden. Beim Lösen des Funktionsmoduls 7 von der Anschlußeinrichtung 6 werden die erste Information aus dem vierten Speicher 7.1 des Funktionsmoduls 7 und die zweiten Informationen aus dem fünften Speicher in die zweite Vergleichereinheit 25 eingelesen, so daß diese die erste Information mit den zweiten Informationen vergleicht und daraus in Abhängigkeit davon, welche der zweiten Informationen mit der ersten Information übereinstimmt, an einem ihrer Ausgänge 25.3 eine Schaltimpuls für die Freigabeeinrichtung 11 anlegt, die dann in Abhängigkeit von diesem Schaltimpuls die Verbindung zwischen dem die entsprechenden Funktionsinformationen enthaltenden zweiten Speicher 13 und der Verarbeitungseinrichtung 12 trennt. Hierzu sind die Ausgänge 25.3 der zweiten Vergleichereinheit 25 mit dem zweiten Schalteingang 23.2 des jeweiligen ersten Schalters 23 verbunden.

Zur Auslösung des Vergleiches der ersten und zweiten Informationen in der zweiten Vergleichereinheit 25 umfassen die Anschlußeinrichtungen 6 einen dritten Anschluß 6.3, über den eine im Funktionsmodul 7 vorgesehene mit dem Adreßeingang des vierten Speichers 7.1 verbundene, als zweiter Adressierer 7.3 ausgebildete zweite Betätigungseinheit mit dem Adreßeingang 26.2 des fünften Speichers 26 verbunden ist. Die Anschlußeinrichtung 6 und das Funktionsmodul 7 sind dabei so ausgebildet, daß der zweite Adressierer 7.3 beim Lösen des Funktionsmoduls 7 von der Anschlußeinrichtung 6 betätigt wird und somit durch entsprechende Adreßimpulse das Auslesen der ersten Information aus dem vierten Speicher 7.1 sowie das Auslesen der zweiten Information aus dem fünften Speicher 26 in die zweite Vergleichereinheit 25 bewirkt.

Um die zweite Einrichtung beim Lösen eines Funktionsmoduls 7 wieder in den entsprechenden Ausgangszustand zurückzusetzen, d. h. den Eingang 20.1 des Umschalters 20 wieder mit seinem ersten Ausgang 20.2 zu verbinden, sind die Ausgänge 25.3 der zweiten Vergleichereinheit 25 mit den jeweiligen zweiten Schalteingängen 20.5 der ersten Umschalter verbunden. Bei erneutem Anschließen eines Funktionsmoduls 7 dieser Art werden dann also wieder die entsprechenden Funktionsinformationen abgerufen.

Ein Update der Funktionsinformationen in regelmäßigen Zeitintervallen wird im gezeigten Beispiel dadurch erzielt, daß die Adressiermodule 16 eine mit Betätigung des Adressiermoduls 16 aktivierte Zeitschaltung 16.1 umfassen, die das Adressiermodul 16 nach einem vorgegebenen Zeitintervall betätigt und dadurch selbst wieder aktiviert wird. Um sicherzustellen, daß das Update jedoch nur erfolgt, wenn auch ein entsprechendes Funktionsmodul 7 angeschlossen ist, ist die Zeitschaltung 16.1 zum Deaktivieren mit dem entsprechenden Ausgang 25.3 der zweiten Vergleichereinheit 25 verbunden. Es versteht sich, daß das Zeitintervall der jeweiligen Zeitschaltung bei vorteilhaften Varianten der Erfindung auch durch den Bediener oder aber gesteuert durch die über das Telekommunikationsnetz abgerufenen Funktionsinformationen vorgebbar sein kann.

Weiterhin ist für das jeweilige Adressiermodul 16 eine dritte Betätigungseinrichtung 27 vorgesehen, über die der Bediener das jeweilige Adressiermodul 16 betätigen und somit ein Update der entsprechenden Funktionsinformationen auslösen kann. Um sicherzustellen, daß das Update jedoch nur erfolgt, wenn auch ein entsprechendes Funktionsmodul 7 angeschlossen ist, ist die jeweilige dritte Betätigungseinrichtung 27 über einen zweiten Schalter 28 mit dem jeweiligen Adressiermodul 16 verbunden, der zum Schließen und damit Aktivieren der dritten Betätigungseinrichtung 27 mit dem entsprechenden Ausgang 14.3 der ersten Vergleichereinheit 14 und zum Öffnen, d. h. Deaktivieren der dritten Betätigungseinrichtung 27, mit dem entsprechenden Ausgang 25.3 der zweiten Vergleichereinheit 25 verbunden ist.

Um die Einstellungen der einzelnen Elemente der Zentraleinheit 1 bzw. des ersten Speichers 2 verändern zu können ist eine mit den entsprechenden Elementen und dem Display 19 verbundene Eingabe- und Programmiereinheit vorgesehen.

Bei den Zusatzfunktionen, die den jeweiligen Funktionsmodulen 7 zugeordnet sind, kann es sich um beliebige Funktionen handeln. Dabei ist es selbstverständlich möglich, einem Funktionsmodul 7 mehrere Zusatzfunktionen zuzuordnen. Besonders vorteilhaft ist es, wenn es sich dabei um Zusatzfunktionen handelt, die von sich im Laufe der Zeit schnell ändernden Informationen abhängen. So ist es beispielsweise möglich als Zusatzfunktion ein sogenanntes "Least-Cost-Routing" zur Verfügung zu stellen, bei dem in Abhängigkeit von der Tageszeit und der gewählten Zielnummer der billigste Provider ermittelt und ausgewählt wird. Hierzu können die sich häufig ändernden Tarife der einzelnen Provider mit der erfindungsgemäßen Vorrichtung problemlos auf dem neuesten Stand gehalten werden. Dabei ist es beispielsweise auch möglich, das Update durch ein über das Telekommunikationsnetz in der Telekommunikationsanlage eingehendes Signal auszulösen, so daß mit jeder Anderung der Tarife, d. h. der Funktionsinformationen, das Update erfolgt.

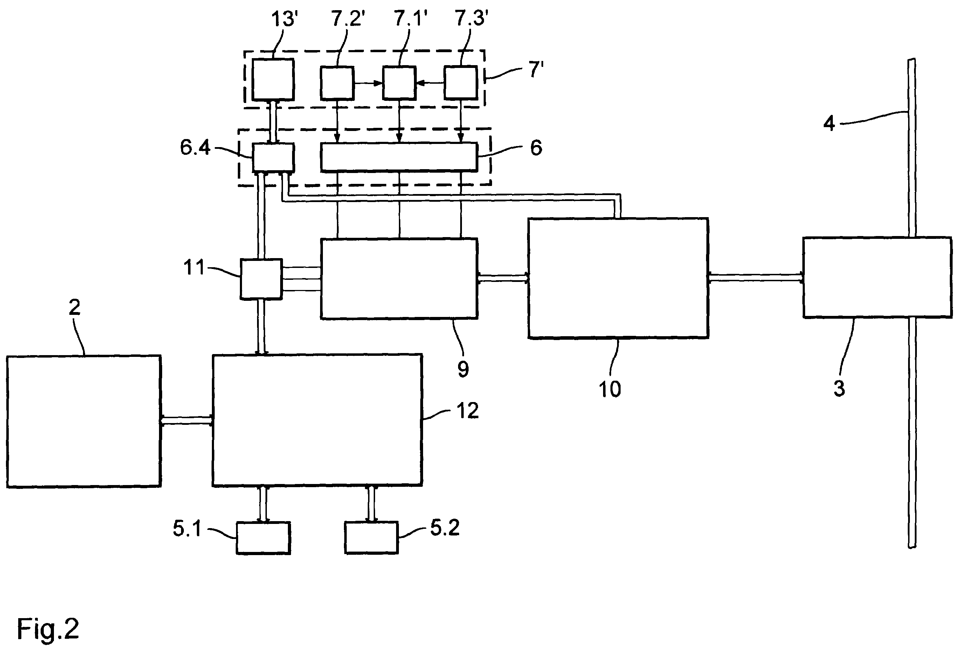

Figur 2 zeigt das Blockschaltbild einer Ausführung der Erfindung, die im wesentlichen der Ausführung aus Figur 1 entspricht, so daß hier lediglich auf die Unterschiede eingegangen werden soll. Der Unterschied besteht dabei lediglich darin, daß nur eine Anschlußeinrichtung 6' vorgesehen ist und das Funktionsmodul 7' den zweiten Speicher 13' umfaßt. Die Anschlußeinrichtung 6 umfaßt einen vierten Anschluß über den der zweite Speicher 13' mit der Freigabeeinrichtung 11 und somit der Verarbeitungseinrichtung 12 verbunden ist. Es versteht sich, daß bei besonders einfach aufgebauten Varianten die Freigabeeinrichtung 11 auch wegfallen kann, da dann mit Entfernen des Funktionsmoduls 7' auch die entsprechende Funktionsinformation nicht mehr zur Verfügung steht.

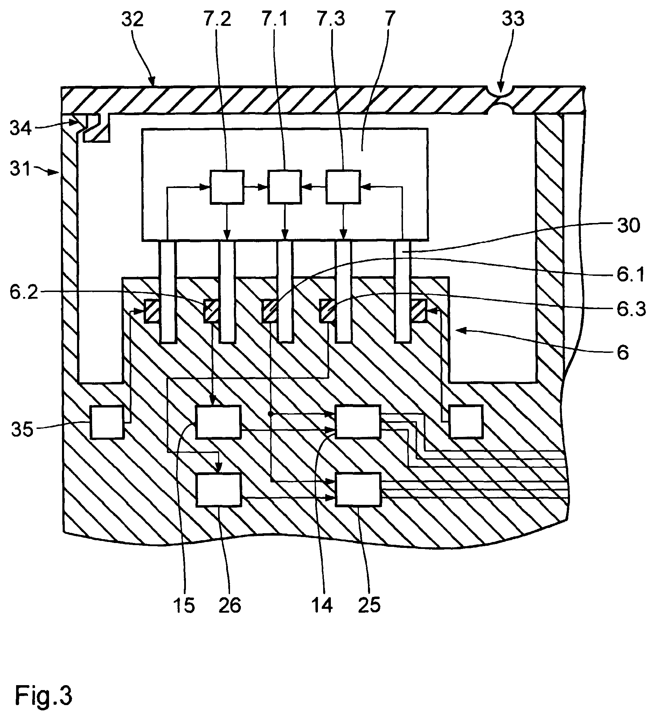

Figur 3 zeigt einen Teilschnitt durch die Ausführung aus Figur 1. Wie dieser Figur zu entnehmen ist, ist die Anschlußeinrichtung 6 als Steckbuchse und das Funktionsmodul 7 als entsprechendes Steckmodul mit Anschlußstiften 30 ausgebildet. Die Anschlußeinrichtung 6 ist in einem Gehäuse 31 das zum Schutz der Anschlußeinrichtung 6 vor Berührung und Verschmutzung mit einem Deckel 32 verschließbar ist. Der Deckel 32 ist dabei über ein Filmscharnier 33 angelenkt und mittels einer Verschlußeinrichtung 34 in geschlossenen Zustand verriegelt.

Zur Betätigung des ersten Adressierers 7.2 beim Einstecken des Funktionsmoduls 7 in die Anschlußeinrichtung 6 ist eine Schalteinrichtung 35 vorgesehen, die bei Verbindung mitdem ersten Adressierer 7.2 einen entsprechenden Adreßimpuls des ersten Adressierers 7.2 auslöst. Zur Betätigung des zweiten Adressierers 7.3 beim Entfernen des Funktionsmoduls 7 aus der Anschlußeinrichtung 6 ist eine Schalteinrichtung 36 vorgesehen. Der zweite Adressierer 7.3 ist dabei so ausgebildet, daß er beim Lösen der Verbindung mit dem zweiten Adressierer 7.3 einen entsprechenden Adreßimpuls abgibt.

Die Erfindung beschränkt sich in ihrer Ausführung nicht auf die vorstehend angegebenen bevorzugten Ausführungsbeispiele. Vielmehr ist eine Anzahl von Varianten möglich, welche von der dargestellten Lösung auch bei grundsätzlich anders gearteten Ausführungen Gebrauch macht.

## Patentansprüche

1. Telekommunikationseinrichtung, insbesondere Telekommunikationsanlage zum Betrieb von Telekommunikationsendgeräten, mit einer Zentraleinheit (1), die mit einem Telekommunikationsnetz (4) verbindbar ist, einem mit der Zentraleinheit (1) verbundenen ersten Speicher (2), in dem die Steuerdaten für die Grundfunktionen der Telekommunikationseinrichtung abgelegt sind, und wenigstens einer mit der Zentraleinheit (1) verbundenen Anschlußeinrichtung (6; 6') zum Anschluß eines Funktionsmoduls (7; 7') zur Erweiterung der Funktionen der Telekommunikationseinrichtung, dadurch gekennzeichnet, daß die Zentraleinheit (1) eine erste Einrichtung (9) zur Erfassung der Art eines mit der Anschlußeinrichtung (6; 6') verbundenen Funktionsmoduls (7; 7'), eine mit der ersten Einrichtung (9) verbundene Steuereinrichtung (10), eine mit der Steuereinrichtung (10) verbundene Freigabeeinrichtung (11) und eine mit der Freigabeeinrichtung (11) sowie dem ersten Speicher (2) verbundene Verarbeitungseinrichtung (12) umfaßt, wobei
die Steuereinrichtung (10) derart ausgebildet ist, daß sie bei oder nach Verbindung eines Funktionsmoduls (7; 7') mit der Anschlußeinrichtung (6; 6') in Abhängigkeit von der erfaßten Art des Funktionsmoduls (7; 7') über das Telekommunikationsnetz (4) aus einem mit dem Telekommunikationsnetz (4) verbundenen Datenspeicher (8) dem Funktionsmodul (7; 7') zugeordnete Funktionsinformationen abruft und in einem bei Verbindung eines Funktionsmoduls (7; 7') mit der Anschlußeinrichtung (6; 6') über die Freigabeeinrichtung (11) mit der Verarbeitungseinrichtung (12) verbundenen zweiten Speicher (13; 13') ablegt.

2. Telekommunikationseinrichtung nach Anspruch 1, dadurch gekennzeichnet, daß die Zentraleinheit (1) den zweiten Speicher (13) umfaßt.

3. Telekommunikationseinrichtung nach Anspruch 1 oder 2, dadurch gekennzeichnet, daß die erste Einrichtung (9) zur Erfassung der Art eines mit der Anschlußeinrichtung (6; 6') verbundenen Funktionsmoduls (7; 7') eine erste Vergleichereinheit (14) umfaßt, deren erster Eingang (14.1) mit einem ersten Anschluß (6.1) der Anschlußeinrichtung (6; 6') und deren zweiter Eingang (14.2) mit einem dritten Speicher (15) verbunden ist, wobei
der erste Anschluß (6.1) bei Verbindung eines Funktionsmoduls () mit der Anschlußeinrichtung (6; 6') mit einem vierten Speicher (7.1) des Funktionsmoduls (7; 7') verbunden ist, in dem eine erste Information über die Art des Funktionsmoduls (7; 7') gespeichert ist,
der dritte Speicher (15) zweite Informationen über die Art der mit der Anschlußeinrichtung (6; 6') verbindbaren Funktionsmodule (7; 7') enthält, und
zur Auslösung des Vergleichs der ersten Information und der zweiten Informationen in der ersten Vergleichereinheit (14) wenigstens eine erste Betätigungseinheit (6.2) vorgesehen ist.

4. Telekommunikationseinrichtung nach Anspruch 3, dadurch gekennzeichnet, daß die erste Betätigungseinheit (6.2) zur Betätigung beim Verbinden des Funktionsmoduls (7; 7') mit der Anschlußeinrichtung (6; 6') ausgebildet ist.

5. Telekommunikationseinrichtung nach Anspruch 3 oder 4, dadurch gekennzeichnet, daß die Steuereinheit (10) eine beim Verbinden des Funktionsmoduls (7; 7') mit der Anschlußeinrichtung (6; 6') mit dem Ausgang (14.3) der ersten Vergleichereinheit sowie dem zweiten Speicher (13; 13') verbundene Download-Einheit (17) zum Abrufen der dem Funktionsmodul (7; 7')zugeordneten Funktionsinformationen über das Telekommunikationsnetz (4) und Ablegen der abgerufenen Funktionsinformationen im zweiten Speicher (13; 13') umfaßt.

6. Telekommunikationseinrichtung nach Anspruch 5, dadurch gekennzeichnet, daß die Steuereinheit (10) für die jeweilige Funktionsmodulart wenigstens ein beim Verbinden des Funktionsmoduls (7;7') mit der Anschlußeinrichtung (6; 6') mit der ersten Vergleichereinheit (14) verbundenes erstes Adressiermodul (16) umfaßt, das mit dem Steuereingang der Download-Einheit (17) verbunden ist.

7. Telekommunikationseinrichtung nach einem der vorhergehenden Ansprüche, dadurch gekennzeichnet, daß eine Anzahl von Anschlußeinrichtungen (6; 6') vorgesehen ist und die Steuereinrichtung (10) eine zweite Einrichtung (18) zur Erfassung der Art der mit den Anschlußeinrichtungen (6; 6') verbundenen Funktionsmodule (7; 7') umfaßt, die zur Anzeige des Anschließens eines weiteren Funktionsmoduls einer bereits angeschlossenen Art mit einer Signaleinrichtung (19) verbunden ist.

8. Telekommunikationseinrichtung nach Anspruch 7, dadurch gekennzeichnet, daß die erste Vergleichereinheit (14) für die jeweilige Funktionsmodulart einen Ausgang (14.3) aufweist und die zweite Einrichtung für die jeweilige Funktionsmodulart einen Umschalter(20) umfaßt, dessen Eingang (20.1) mit dem Ausgang (14.3) der ersten Vergleichereinheit (14), dessen erster Ausgang (20.2) mit dem jeweiligen Adressiermodul (16) und dessen zweiter Ausgang (20.3) mit der Signaleinrichtung (19) verbunden ist, wobei
der jeweilige Umschalter (20) derart ausgebildet ist, daß er nach Ansprechen des Adressiermoduls (16) durch die erste Vergleichereinheit (14) den Ausgang (14.3) der ersten Vergleichereinheit (14) mit der Signaleinrichtung (19) verbindet.

9. Telekommunikationseinrichtung nach einem der Ansprüche 3 bis 8, dadurch gekennzeichnet, daß die Freigabeeinrichtung (11) zum Herstellen der Verbindung zwischen dem zweiten Speicher (13; 13'), der für die dem jeweiligen Funktionsmodul (7; 7') zugeordneten Funktionsinformationen vorgesehen ist, und der Verarbeitungseinheit (12) mit dem Ausgang (14.3) der ersten Vergleichereinheit (14) oder dem ersten Ausgang (20.2) des jeweiligen Umschalters (20) verbunden ist

10. Telekommunikationseinrichtung nach einem der vorhergehenden Ansprüche, dadurch gekennzeichnet, daß die erste Einrichtung (9) eine Erfassungseinheit (24) zur Erfassung des Lösens des jeweiligen Funktionsmoduls (7; 7') von der Anschlußeinrichtung (6; 6') umfaßt, die zum Lösen der Verbindung zwischen dem jeweiligen zweiten Speicher (13; 13'), der die dem jeweiligen Funktionsmodul (7; 7') zugeordneten Funktionsinformationen enthält, und der Verarbeitungseinheit (12) mit der Freigabeeinrichtung (11) verbunden ist.

11. Telekommunikationseinrichtung nach Anspruch 10, dadurch gekennzeichnet, daß die Erfassungseinheit (24) eine zweite Vergleichereinheit (25) umfaßt, deren erster Eingang (25.1) mit dem ersten Anschluß (6.1) der Anschlußeinrichtung (6; 6'), deren zweiter Eingang (25.2) mit einem fünften Speicher (26) und deren Ausgang (25.3) zur Betätigung der Freigabeeinrichtung (11) mit der Freigabeeinrichtung (11) verbunden ist, wobei
der erste Anschluß (6.1) bei Verbindung eines Funktionsmoduls (7; 7') mit der Anschlußeinrichtung (6; 6') mit dem dritten Speicher (7.1) des Funktionsmoduls (7; 7') verbunden ist,
der vierte Speicher (26) zweite Informationen über die Art der mit der Anschlußeinrichtung (6; 6') verbindbaren Funktionsmodule (7; 7') enthält, und
zur Auslösung des Vergleichs der ersten Information und der zweiten Informationen in der zweiten Vergleichereinheit (25) und des aus dem Vergleich resultierenden Betätigungssignals für die Freigabeeinrichtung (11) wenigstens eine zweite Betätigungseinheit (7.3) vorgesehen ist.

12. Telekommunikationseinrichtung nach Anspruch 11, dadurch gekennzeichnet, daß die zweite Betätigungseinheit (7.3) zur Betätigung beim Lösen des Funktionsmoduls (7; 7') von der Anschlußeinrichtung (6; 6') ausgebildet ist.

13. Telekommunikationseinrichtung nach Anspruch 11 oder 12, dadurch gekennzeichnet, daß die zweite Vergleichereinheit (25) zum Rücksetzen der zweiten Einrichtung (18) beim Lösen eines Funktionsmoduls (7; 7') von einer der Anschlußeinrichtungen (6; 6') mit der zweiten Einrichtung (18) verbunden ist.

14. Telekommunikationseinrichtung nach einem der Ansprüche 6 bis 13, dadurch gekennzeichnet, daß das jeweilige erste Adressiermodul (16) zur Betätigung des ersten Adressiermoduls (16) in vorgebbaren Intervallen eine mit Betätigung des ersten Adressiermoduls (16) aktivierte Zeitschaltung (16.1) umfaßt.

15. Telekommunikationseinrichtung nach Anspruch 14, dadurch gekennzeichnet, daß die Zeitschaltung (16.1) zur Deaktivierung beim Lösen der Verbindung des entsprechenden Funktionsmoduls (7; 7') mit der Anschlußeinrichtung (6; 6') mit der zweiten Vergleichereinheit verbunden ist.

16. Telekommunikationseinrichtung nach einem der Ansprüche 6 bis 15, dadurch gekennzeichnet, daß wenigstens eine dritte Betätigungseinrichtung (27) zur Betätigung des jeweiligen ersten Adressiermoduls (16) vorgesehen ist.

17. Telekommunikationseinrichtung nach Anspruch 16, dadurch gekennzeichnet, daß die dritte Betätigungseinrichtung (27) zur Aktivierung mit der ersten Vergleichereinheit (14) und zur Deaktivierung mit der zweiten Vergleichereinheit (25) verbunden ist.

18. Telekommunikationseinrichtung nach einem der vorhergehenden Ansprüche, dadurch gekennzeichnet, daß die Anschlußeinrichtung (6) nach Art einer Steckverbindung ausgebildet ist.

19. Telekommunikationseinrichtung nach einem der vorhergehenden Ansprüche, dadurch gekennzeichnet, daß die Anschlußeinrichtung (6) als durch einen Deckel (32) verschließbare Anschlußbuchse ausgebildet ist.

20. Funktionsmodul (7; 7') für eine Telekommunikationseinrichtung nach einem der vorhergehenden Ansprüche, dadurch gekennzeichnet, daß es einen vierten Speicher (7.1) umfaßt, in dem eine erste Information über die Art des Funktionsmoduls (7; 7') gespeichert ist.

21. Funktionsmodul nach Anspruch 20, dadurch gekennzeichnet, daß es einen bei Verbinden mit der Anschlußeinrichtung (6; 6') betätigten und mit dem dritten Speicher (15) verbundenen ersten Adressierer (7.2) umfaßt, der mit dem vierten Speicher (7.1) verbunden ist.

22. Funktionsmodul nach Anspruch 21, dadurch gekennzeichnet, daß es einen bei Lösen von der Anschlußeinrichtung (6; 6') betätigten und mit dem fünften Speicher (26) verbundenen zweiten Adressierer (7.3) umfaßt, der mit dem vierten Speicher (7.1) verbunden ist.
